# EUROPÄISCHE PATENTSCHRIFT

(11) **EP 0 585 664 B1**
(45) Veröffentlichungstag und Bekanntmachung des Hinweises auf die Patenterteilung: **03.07.1996**
(21) Anmeldenummer: 93112768.2
(22) Anmeldetag: 10.08.1993
(51) Int. Cl.: B29C 45/17

(54) **Kunststoff-Spritzgiessmaschine**
Plastic injection moulding machine
Machine à mouler par injection des matières plastiques

(30) Priorität: 18.08.1992 DE 4227335
(43) Veröffentlichungstag der Anmeldung: 09.03.1994
(73) Patentinhaber: Hehl, Karl, D-72290 Lossburg (DE)
(72) Erfinder: Hehl, Karl, D-72290 Lossburg (DE)
(74) Vertreter: Frank, Gerhard, Dipl.-Phys.

(56) Entgegenhaltungen:
- EP-A- 0 291 008
- EP-A- 0 368 149
- EP-A- 0 483 492
- CH-A- 381 420
- DE-C- 4 142 927

## Beschreibung

Die Erfindung betrifft eine Kunststoff-Spritzgießmaschine nach dem Oberbegriff des Anspruches 1.

Eine derartige Spritzgießmaschine ist aus der DE-PS 38 37 641 bekannt. Mit dieser Maschine können wahlweise weitere Spritzgießformen zum Einsatz kommen, deren nichtzentrale Angußöffnungen bei zentralem Formhohlraum unterschiedliche Positionen aufweisen. Unter diesen Voraussetzungen gelangt der plastifizierte Kunststoff beim Einspritzen über einen etwa parallel zur Schließrichtung der Formschließeinheit verlaufenden Angußkanal in den Formhohlraum, welcher Angußkanal am Rand des Formhohlraumes endet. Ein solcher Anguß wird im folgenden als "Parallelanguß" bezeichnet. In dieser Maschine werden in einer horizontalen Ebene liegende Kolbenstangen von Antriebszylindern beweglich geführt. Die Spritzgießeinheit wird auf einem die Spritzgießeinheit tragenden gußeisernen Verschiebetisch gelagert und ist auf horizontalen Führungen an zentrale und nicht zentrale Angußöffnungen verschiebbar. Die Verschiebung erfolgt dabei über eine aus Wegmeßeinrichtung und Spindeltrieb gebildete, nach Programm betätigbare Verschiebeeinrichtung, die lösbar am Träger befestigt ist. Es läßt sich damit die Spritzgießeinheit genau abstützen und justieren, wobei bewußt eine aufwendige Abstützung in Form des Verschiebetisches in Kauf genommen wird. Problematisch ist in diesem Zusammenhang aber auch, daß der Zugang zur Förderschnecke, insbesondere zu Reinigungszwecken, durch die parallel zur Spritzachse vorgegebene Anordnung der Spritzgießeinheit erschwert ist. Zudem kann es durch die voneinander entfernten Führungen von Kolbenstangen und Verschiebetisch zu Verkantungen und Ungenauigkeiten kommen.

Ferner ist es aus der CH-PS 381 420 bekannt, eine Spritzgießeinheit auf am Maschinenfuß fest angeordneten Führungsschienen mittels eines Trägers quer zu verschieben. An dem Träger selbst stützt sich eine weitere Verschiebeeinrichtung ab, die die Spritzgießeinheit horizontal auf die Angußöffnungen auf weiteren Führungsschienen heranfahren kann. Die Führungsschienen sind jedoch als Winkelschienen ausgebildet, um aufgrund der mangelnden weiteren Führung der Spritzgießeinheit überhaupt eine genaue Lagejustierung zu ermöglichen. Aufgrund der somit losen Verbindung zwischen Formträger und Spritzgießeinheit kommt es jedoch von Spritzzyklus zu Spritzzyklus zu Ungenauigkeiten hinsichtlich des Düsenansatzpunktes und zu Verkantungen an den Führungsschienen für die Querverschiebung.

Aus der DE-PS 40 34 577 ist es bekannt, die Kolbenstangen der Antriebszylinder in einem Muffenträger zu führen, der bei Verschiebung der Spritzgießeinheit passiv mitgeführt wird oder auch für sich manuell verschiebbar ist. Beim Einspritzen des Kunststoffes bewirkt dabei eine dem Anlagedruck des Plastifizierzylinders entgegengesetzte Kraft in den Kolbenstangen eine Arretierung des Muffenträgers an punktförmigen Führungsorganen. Zwar ist die Verbindung der die Kolbenstangen aufnehmenden Muffen über den Muffenträger zum Formträger auf einfache Weise gelöst, jedoch ergibt sich durch den Abstand zwischen dem Angriffspunkt der Kolbenstangen und den Krafteinleitungspunkten der Führungsorgane in den Formträger ein Kraftfeld, das bei größeren Verschiebungen eine seitliche Versetzung der Führungsorgane erfordert, so daß diese Vorrichtung einer automatisierten Verschiebung über die gesamte Breite des Formträgers nicht zugänglich ist.

Aus der älteren Patentanmeldung P 41 42 927 ist es ferner bekannt, Einspritzzylinder zum achsialen Antreiben einer im Plastifizierzylinder angeordneten rotierbaren Förderschnecke und Antriebszylinder zum achsialen Verschieben der Spritzgießeinheit ineinander zu schachteln, wobei der Antriebszylinder einstückig mit dem als Radialflansch des Antriebszylinders ausgebildeten Kolben für den Zylinder der Einspritzzylinder ist. Dadurch wird es möglich, selbst die bei großen Kräften entstehenden hohen Drücke problemlos und ohne Dichtungsschwierigkeiten aufzunehmen. Durch die dabei vorgeschlagene Verwendung von Stahlhülsen wird zudem der Herstellungsprozeß vereinfacht. Die Verwendung von Stahlhülsen verringert aber auch den Anteil des sonst üblichen Ausschusses bei aus Guß hergestellten Zylindern.

Ausgehend von diesem Stand der Technik liegt der Erfindung die Aufgabe zugrunde, eine Kunststoff-Spritzgießmaschine der eingangs genannten Art derart weiterzubilden, daß auf einfache und kostengünstige Weise eine Maßgenauigkeit erreicht wird, die insbesondere bei der Übertragung hoher Kräfte erforderlich ist.

Diese Aufgabe wird durch die Merkmale des Anspruches 1 gelöst.

Das grundsätzliche Prinzip, den Träger der Spritzgießeinheit auf quer dazu angeordneten Schienen gleiten zu lassen, schafft dabei günstige Voraussetzungen für eine rationelle Serienfertigung. Die Abstützung der Spritzgießeinheit erfolgt dadurch, daß lediglich Schienen aufeinandergleiten. Insofern wird bewußt auf aufwendige Verschiebemechanismen verzichtet. Die Oberflächenreibung kann dabei beispielsweise durch ein Plasmanitrieren der Reibungsflächen verringert werden, wobei zugleich den Erfordernissen eines zuverlässigen Rostschutzes genügt wird. Durch Flachmaterialien ist dabei auf einfachste Weise ein maßgenaues Abstützen möglich, ohne daß es erforderlich ist, den Maschinenfuß starr auszubilden. Nur an ihren Auflagepunkten muß am Maschinenfuß ein entsprechender Aufwand getrieben werden, um den Anschluß der Schienen an den Maschinenfuß zu gewährleisten.

Insbesondere wenn große Kräfte, z.B. durch eine Zylinderanordnung, wie aus der älteren Patentanmeldung P 41 42 927 bekannt, aufgebracht werden können, ist es wichtig, daß die hohen Kräfte einerseits sicher am Formträger aufgenommen werden können und zum anderen keine Verspannungen im Bereich der Führung der Spritzgießeinheit am Maschinenfuß auftreten, die auf Dauer zu Beschädigungen und mit zunehmender Lebensdauer der Spritzgießmaschine auch zu Maßungenauigkeiten führen können. Gleitet der Träger lediglich auf dem Maschinenfuß, können derartige Verspannungen und Verkantungen überhaupt nicht entstehen, da weder eine gesonderte Führung für die Spritzgießeinheit im hinteren Teil, noch ein Verkantungen hervorrufender Antrieb für die Querverschiebung vorgesehen ist.

Bei einer Ausgestaltung nach Anspruch 2 wird durch den verringerten Abstand zwischen Verschiebeeinrichtung und Führungsorganen, in denen die Verschiebung erfolgt, die Gefahr von Verkantungen verringert. Die Verschiebung der Spritzgießeinheit erfolgt nur noch am Formträger.
Trotz des außermittigen Angriffs der Verschiebeeinrichtung und den außermittig angreifenden Reibungskräften der Auflage können die auftretenden Kräfte sicher bewältigt werden, so daß das große Moment bei diesem Angriff in Kauf genommen werden kann. Von selbst ergibt sich dann aber bei jedem Spritzzyklus eine exakte Düsenmitte, da ein selbständiges Einrichten der Spritzgießeinheit während der Arretierbewegung nicht durch den weit vom Zylinderkopf entfernten Verschiebemechanismus behindert wird.

Weitere Verbesserungen hinsichtlich der Krafteinleitung in den Formträger ergeben sich bei einer Ausgestaltung nach Anspruch 3. Da die Krafteinleitung einer dem Anlagedruck des Plastifizierzylinders entgegengesetzten Kraft in den Kolbenstangen auf ein nahezu sich über die gesamte Breite erstreckendes Führungsorgan erfolgt, ergibt sich in jeder der jeweiligen Angußöffnung der Spritzgießform zugeordneten Stellung eine kräfteidentische Anbindung. Dadurch ist nicht mehr die Spritzgießeinheit an verschiedenen Punkten am Formträger anzubinden. Die Spritzgießeinheit kann stattdessen automatisch in jede Stellung verschoben werden.

Durch die Ausbildung eines Schlittens nach Anspruch 5, der auf Schienen gleitet, die nur an den Seitenrändern des Maschinenfußes abgestützt sind, ist der Raum im Maschinenfuß jederzeit zu Wartungszwecken leicht zugänglich. Unter den Schienen können die Abdeckungen des Maschinenfußes unabhängig vom Vorhandensein der Spritzgießeinheit entfernt und die Spritzgießeinheit jeweils auf eine Seite verschoben werden, die einen freien Zugang für das Wartungspersonal ermöglicht. Selbst wenn also der Maschinenfuß vor Ort nur ungenau eingerichtet ist, kann durch die Justiermöglichkeit nach Anspruch 5 die gesamte Spritzgießeinheit maßgenau eingestellt werden. Grundsätzlich genügt aber auch eine feste Verbindung der Kreuzschienen mit dem Maschinenfuß, so daß bereits mit Justierung des Maschinenfußes die Kreuzschienen von selbst miteingerichtet werden. Die Schlitze ermöglichen eine einfache Herstellung, da die zur Justierung erforderlichen Widerlager leicht von oben im Maschinenfuß befestigt werden können. Obwohl somit die Spritzgießeinheit beim Verschieben auf unbearbeiteten Maschinenoberflächen gleitet, ergibt sich eine reibungslosere Verschiebemöglichkeit.

Werden nach Anspruch 6 die die Antriebseinheit mit dem Schlitten verbindenden Tragelemente als zwei identische Gußkörper ausgebildet, die über Querschienen miteinander verbunden sind, können diese Gußkörper leichter hergestellt werden, da keine aufwendigen Gußformen mehr erforderlich sind und bei Störungen leicht eines dieser Tragelemente ausgetauscht werden kann. Insbesondere wird bei den so geformten Tragelementen die Gefahr von Lunkern gegenüber den bisher bekannten U-förmigen Bügeln verringert.

Bei Wartungsarbeiten an der Förderschnecke oder am Plastifizierzylinder erlaubt die Auflage im hinteren Bereich bei einer Ausgestaltung nach den Ansprüchen 7-8 eine Verbesserung. Bevor die Kolbenstangen vom Muffenträger gelöst sind und nachdem die Spritzgießeinheit zurückgefahren ist, kann sie leicht am Maschinenfuß abgestützt und abgesichert werden. Der Punkt, an dem die Abstützung erfolgt, dient als Schwenkpunkt für Drehbewegungen, die erforderlich sind, um eine leichte Zugänglichkeit der Förderschnecke zu gewährleisten. Um insbesondere bei Ausbau von Förderschnecke und/oder Plastifizierzylinder ein Kippen der restlichen Spritzgießeinheit zu vermeiden, wird die Spritzgießeinheit über einen Hebel in dieser Stellung gesichert.

Nach den Ansprüchen 9 und 10 wird der Antriebszylinder aus einer Stahlhülse hergestellt, wobei zugleich aus der Zylinderwandung der Kolben für den Einspritzzylinder herausgearbeitet wird. Durch die einstückige Ausbildung ist aber diese Zylinder-Kolbenverbindung dafür geeignet, auch hohe Drücke problemlos und ohne Dichtungsschwierigkeiten aufzunehmen. Von der Produktionsseite her ist auf einfache Weise die Stahlhülse zu bearbeiten, da Maßtoleranzen, insbesondere an den äußeren Zylinderwandungen, weniger ins Gewicht fallen. Der gesamte Aufbau ermöglicht sowohl ein Einspritzen beim Linearanguß als auch ein Einspritzen in die Trennebene, da ein geringerer Aufwand für die Befestigung der Zylinder getrieben werden muß.

Beide Zylinder sind als Stahlhülsen ausgebildet. In der Praxis hat sich gezeigt, daß die Verwendung von Gußteilen beim Einsatz unter hohen Drücken Schwierigkeiten bereitet, da die beim Guß der Gußteile auftretenden Lunker nahezu 25% der Gußteile für den Einsatz unbrauchbar machen. Dabei sind die ineinandergeschachtelten Antriebs- und Einspritzzylinder als eine gemeinsame bauliche Einheit mit einem geringen Arbeitsaufwand in die Bohrungen des Tragkörpers einfügbar. Vor der Montage können die Antriebszylinder bzw. Einspritzzylinder auf ihre Arbeitsfähigkeit überprüft werden, da lediglich der Antriebszylinder mit dem Zylinderdeckel verschlossen werden muß. Im Betrieb des Käufers ist im Falle einer Betriebsstörung ein Austausch auch von weniger geschultem Personal möglich, da nur der vordere Zylinderdeckel abgenommen werden muß, um die Antriebszylinder aus dem Trägerblock zu lösen. Somit lassen sich dann aber die Betriebsausfallzeiten wesentlich verkürzen.

Weitere Vorteile ergeben sich aus den Unteransprüchen.
Im folgenden wird die Erfindung anhand der Figuren näher erläutert. Es zeigen:
- Fig. 1: eine Seitenansicht eines Teils der Spritzgießmaschine der auf den Formträger der Formschließeinheit und die Spritzgießeinheit beschränkt ist
- Fig. 2: einen vergrößerten Ausschnitt von Fig. 1, auf dem die Tragkonstruktion dargestellt ist,
- Fig. 3: eine Draufsicht auf die Spritzgießmaschine gemäß Fig. 1, bei der die Spritzgießeinheit bis auf die Kolbenstangen 13a abgeschnitten ist,
- Fig. 4: eine Ansicht des Formträgers an einem Schnitt nach Linie 4-4 von Fig. 3,
- Fig. 5: eine Draufsicht auf die Spritzgießmaschine gemäß Fig. 1 in einer seitlich verschobenen Stellung der Spritzgießeinheit,
- Fig. 6: eine Darstellung gemäß Fig. 5, wobei die Spritzgieß
einheit in ihre Mittelstellung verschoben ist und wobei die Kolbenstangen bereits zurückgefahren sind,
- Fig. 7: eine Darstellung gemäß Fig. 6 mit einer verschwenkten Spritzgießeinheit,
- Fig. 8, 9: einen vergrößerten Ausschnitt des Bereiches A von Fig. 1 in einer für die Verschwenkung unverriegelten bzw. verriegelten Stellung des Rastelements,
- Fig. 10: eine Seitenansicht im Bereich eines Auflagerpunktes der Kreuzschienen 23,
- Fig. 11: eine Draufsicht auf das Auflager gemäß Fig. 10, teilweise geschnitten gemäß Linie 11-11 von Fig. 10,
- Fig. 12: einen vertikalen Schnitt durch Antriebs- und Einspritzzylinder im Bereich einer Kolbenstange.

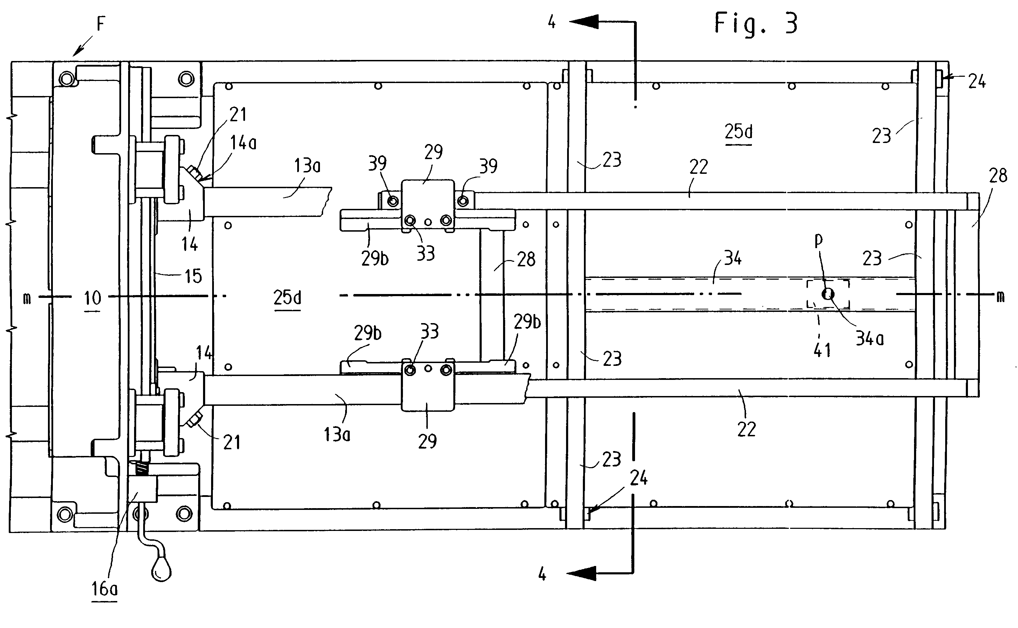

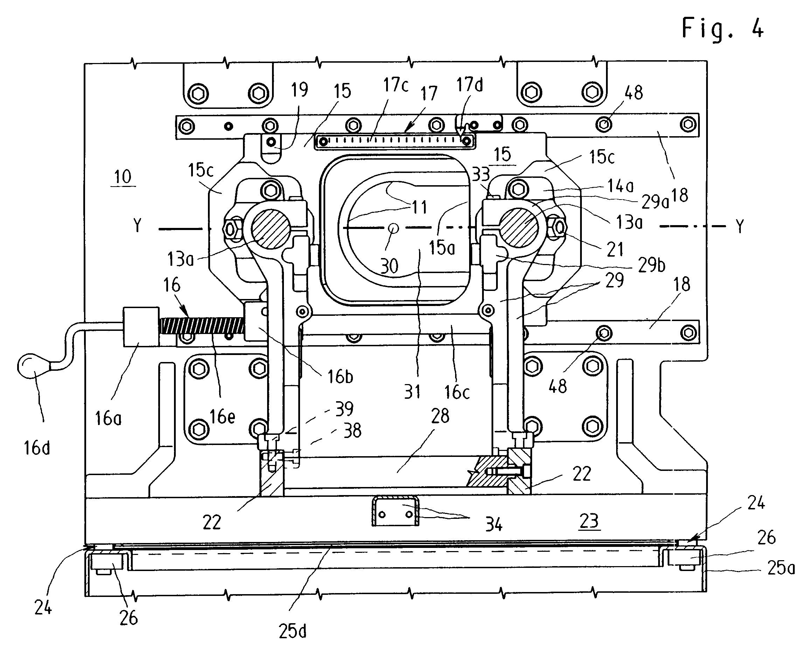

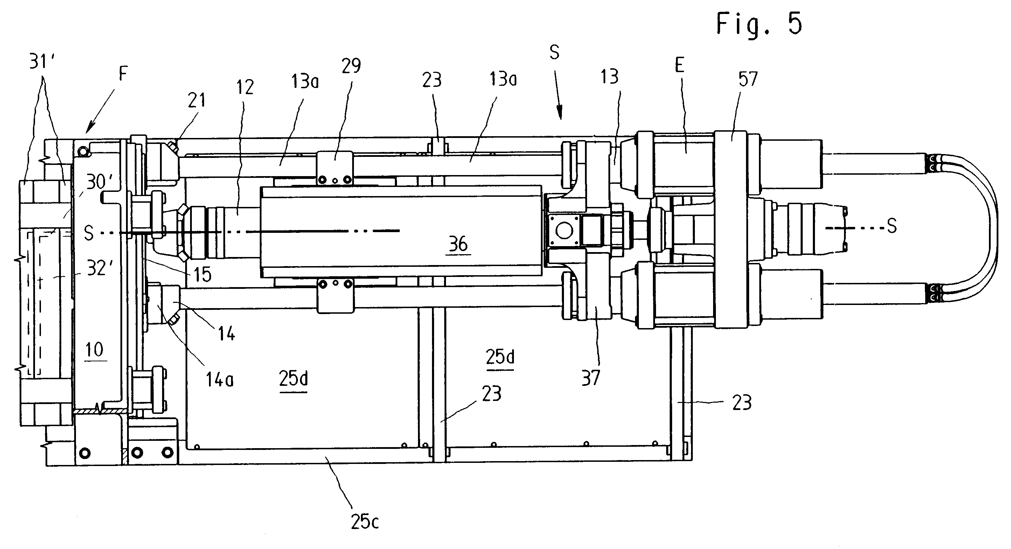

Der stationäre Formträger 10 ist Bestandteil der horizontal schließenden Formschließeinheit F einer Kunststoffspritzgießmaschine, die mit einer horizontal einspritzenden Spritzgießeinheit S versehen ist. Auf dem Formträger 10 ist eine erste Spritzgießform 31 (Fig. 4) mit zentraler Angußöffnung 30 aufspannbar. Wahlweise sind auf den Formträger 10 jedoch auch verschiedene weitere Spritzgießformen 31' (Fig. 5) mit nichtzentraler Angußöffnung 30' aufspannbar. Vorzugsweise sind die Formhohlräume 32,32' zentral angeordnet. In die Spritzgießformen 31, 31' kann plastifiziertes Kunststoffmaterial oder vergleichbares Material, das für die Herstellung von Teilen auf Kunststoff-Spritzgießmaschinen geeignet ist, wie z.B. keramisches Material durch eine mittels einer Verschiebeeinrichtung quer zu ihrer Spritzachse s-s in horizontaler Richtung verschiebbare Spritzgießeinheit S eingespritzt werden. Die Einspritzung erfolgt nach einer parallelen Verschiebung der Spritzgießeinheit im Parallelanguß, wobei die Spritzgießeinheit auf horizontalen Führungsflächen eines Trägers an die Angußöffnungen heranführbar ist. Der Träger ist auf quer zur Spritzachse s-s gelegenen Stützelementen angeordnet, die sich an parallelen Seitenwänden 25a des Maschinenfußes abstützen. Der Träger wird durch ein in Richtung der Spritzachse angeordnetes Schienenpaar 22 gebildet, das beim Verschieben auf quer zur Spritzachse angeordneten Schienen frei gleitet. Diese Schienen werden aufgrund ihrer kreuzförmigen Anordnung, wie sie sich insbesondere aus der Draufsicht gemäß Fig. 3 ergibt, im folgenden als Kreuzschienen 23 bezeichnet. Die beiden Kreuzschienen 23 sind auf vier fein bearbeiteten Auflagern am Maschinenfuß 25 abgestützt und überbrücken im übrigen den gesamten Maschinenfuß (Fig. 4).

Der Formträger 10 weist eine, etwa symmetrisch zu seiner horizontalen Symmetrieebene y-y (Fig. 4) angeordnete, in Verschieberichtung vergrösserte Durchtrittsöffnung 11 für den Plastifizierzylinder 12 auf. Der Plastifizierzylinder ist mittels hydraulischer Antriebszylinder an die jeweils eingespannte Spritzgießform 31, 31' anlegbar. Als Antriebseinheit können jedoch auch andere Antriebe, wie elektromechanische oder pneumatische Antriebe eingesetzt werden. Die Kolbenstangen 13a der Antriebszylinder 13 erstrecken sich bis zum Formträger 10 und bilden Endbereiche der Antriebseinheit. Beim Verschieben der Spritzgießeinheit S sind die freien Enden 13b der Kolbenstangen 13a in Muffen 14 wenigstens eines in den Führungsorganen verschiebbaren Muffenträgers 15 aufgenommen. Statt Muffen können auch andere Aufnahmen vorgesehen sein. Der Muffenträger 15 weist zwischen seinen Muffen eine Ausnehmung 15a für den Durchtritt des Plastifizierzylinders auf. Über den Muffenträger 15 sind die Kolbenstangen in Führungsorganen des Formträgers 10 mittelbar geführt. Diese Führungsorgane liegen außerhalb der Durchtrittsöffnung 11, z.B. oberhalb und unterhalb der Durchtrittsöffnung. Der Muffenträger überträgt somit die während des Spritzbetriebs von den Kolbenstangen 13a übertragenen Kräfte über die Führungsorgane auf den Formträger 10. Der Muffenträger 15 überdeckt in seinen beiden extremen, einander entgegengesetzten Verschiebepositionen die Durchtrittsöffnung 11 je etwa hälftig. Während des Spritzbetriebs sind die Kolbenstangen axial in ihrer Position am Muffenträger 15 festgelegt.

Die Verschiebung des Muffenträgers 15 erfolgt über eine als Spindeltrieb 16 ausgebildete Verschiebeeinrichtung, die am Formträger angreift. Im übrigen ist die Spritzgießeinheit zumindest in Verschieberichtung frei verschieblich. Der Spindettrieb kann dabei entweder in Fig. 4 manuell über eine Kurbel 16d betätigt oder über einen Motor angetrieben werden. Das Spindeldrehlager 16a ist dabei am Formträger angeordnet, während die Mutter 16b dem Muffenträger 15 zugeordnet ist. Um Schwierigkeiten, wie z. B. Verschmutzungen der Gewindespindel 16e vorzubeugen, ist diese im Bereich zwischen den beiden Kolbenstangen 13a durch eine Spindelhülse 16c geschützt.

Muffenträger 15 und Formträger 10 ist eine Wegmeßeinrichtung zugeordnet, deren beweglicher Teil am Muffenträger 15 und deren stationärer Teil am Formträger 10 angeordnet ist. Die Maschine kann grundsätzlich zunächst in einer Variante ausgeliefert werden, die für den nachträglichen Einsatz der Verschiebeeinrichtung bereits vorbereitet ist. Ganz nach den jeweiligen Bedürfnissen des Kunden kann eine Nachrüstung oder von vornherein eine Auslieferung mit dem manuell oder dem motorisch betätigten Spindeltrieb erfolgen. Erfolgt eine manuelle Verschiebung, genügt als Wegmeßeinrichtung 17 eine Skalierung 17c am Muffenträger und ein Zeiger 17d an der als Führungsorgan ausgebildeten Führungsschiene 18. Bei einer motorischen Verschiebung wird als Wegmeßeinrichtung ein Linearpotentiometer vorgesehen, das Signale über die Stellung 'der Spritzgießeinheit an eine Steuereinheit liefert.

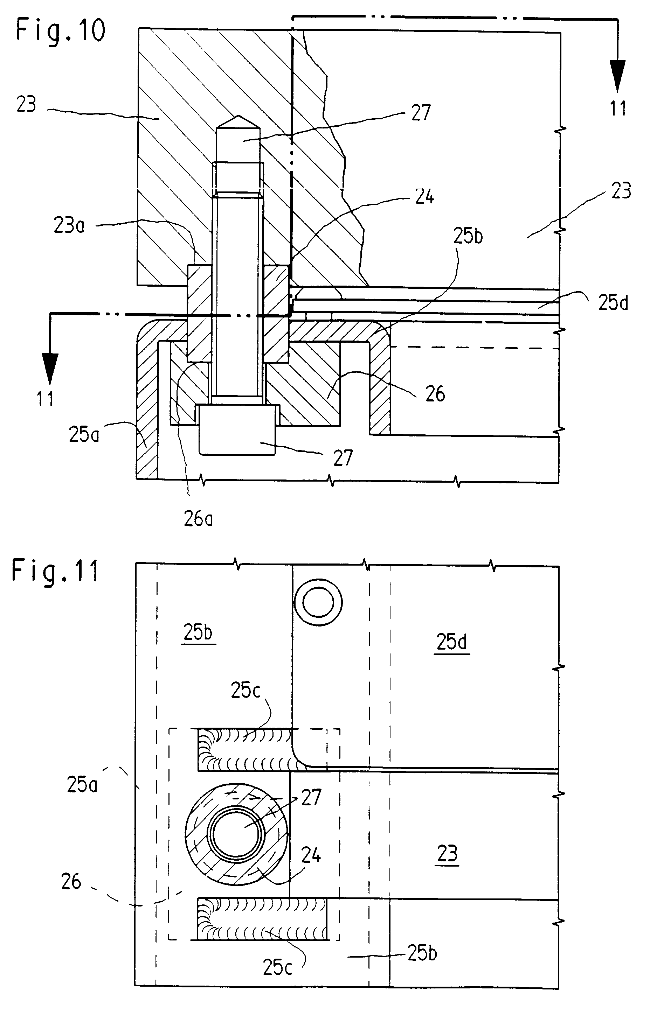

Um eine Verschiebung über den gesamten gewünschten Bereich zu verwirklichen, erstreckt sich die Führungsschiene 18 nahezu über die gesamte Breite des Formträgers. Die Führungsschiene 18 ist mittels Bolzen 48 unmittelbar mit einer Anformung 10a des Formträgers 10 verbunden. Die Kolbenstangen 13a liegen in der horizontalen Symmetrieebene y-y des Formträgers 10 und sind in den Führungsschienen 18 geführt. Durch die Vielzahl der die Führungsschienen 18 befestigenden Bolzen 48 wird in jeder Stellung der Spritzgießeinheit eine weitgehend identische Kräfteeinleitung verwirklicht. Der beim Verschieben mit Spiel verschiebbare Muffenträger 15 kann durch wenigstens ein Spannelement 19 (Fig. 11) an der Führungsschiene 18 festgelegt werden.

Am Muffenträger 15 sind die Endbereiche der Antriebseinheit 13 in den Muffen durch Spannbolzen 21 gehalten, die an den Spannflächen 13c der Kolbenstangen angreifen. Die Muffen sind entweder am Muffenträger 15 unmittelbar angeformt oder über Muffenelemente 14a am Muffenträger befestigt. Die Muffenelemente 14a sind über Spannbolzen 47 mit dem Muffenträger 15 verbunden. Verschiedene Paare von Muffenelementen mit angeformten Muffen können alternativ auf den plangeschliffenen Spannflächen 15c des Muffenträgers 15 aufgespannt werden. Die einzelnen Muffenelemente 14a unterscheiden sich durch einen unterschiedlichen gegenseitigen Abstand und/oder eine unterschiedliche lichte Weite ihrer Muffen. Dadurch können verschiedenste Spritzgießeinheiten an dem Muffenträger befestigt werden. Wie im Stand der Technik bekannt, können auch zwei Muffenträger vorgesehen werden, die jeweils nur eine Kolbenstange aufnehmen.

Grundsätzlich befindet sich das Auflager 24 für die Kreuzschienen nach den Fign. 10, 11 am umgebördelten Längsrand 25b der Seitenwände 25a des Maschinenfußes 25. Am Längsrand 25b sind an jedem Auflager zwei Schlitze 25c vorgesehen, über die ein Widerlagerblock 26 am Maschinenfuß von oben angeschweißt werden kann. Dieser Widerlagerblock 26 dient einer zentrierten Schraube 27 als Widerlager. Zwischen den beiden Schlitzen 25c ist eine Öffnung vorgesehen, die einerseits die Schraube 27 und andererseits ein als Auflager 24 dienendes Zentrierstück koaxial aufnimmt. Das Zentrierstück ist dabei sowohl am Widerlagerblock als auch an der Kreuzschiene 23 jeweils in Ausnehmungen 23a, 26a gelagert. Da an diesen Auflagerpunkten auch eine Justierung der Kreuzschienen 23 erfolgen kann, um von der Aufstellgenauigkeit und der steifheit des Maschinenfußes 25 unabhängig zu sein, kann die Schraube 27 auch als Justierschraube ausgebildet sein. In diesem Fall ist die Schraube 27 von unten zugänglich, und bedarfsweise können auch Durchgriffsöffnungen im Maschinenfuß vorgesehen werden, um eine Zugänglichkeit der Schraube zu erleichtern. Die Kreuzschienen 23 können aber auch vom Hersteller mit dem Maschinenfuß so verbunden werden, daß sie sich beim Einrichten des Maschinenfußes vor Ort selbstständig einrichten.

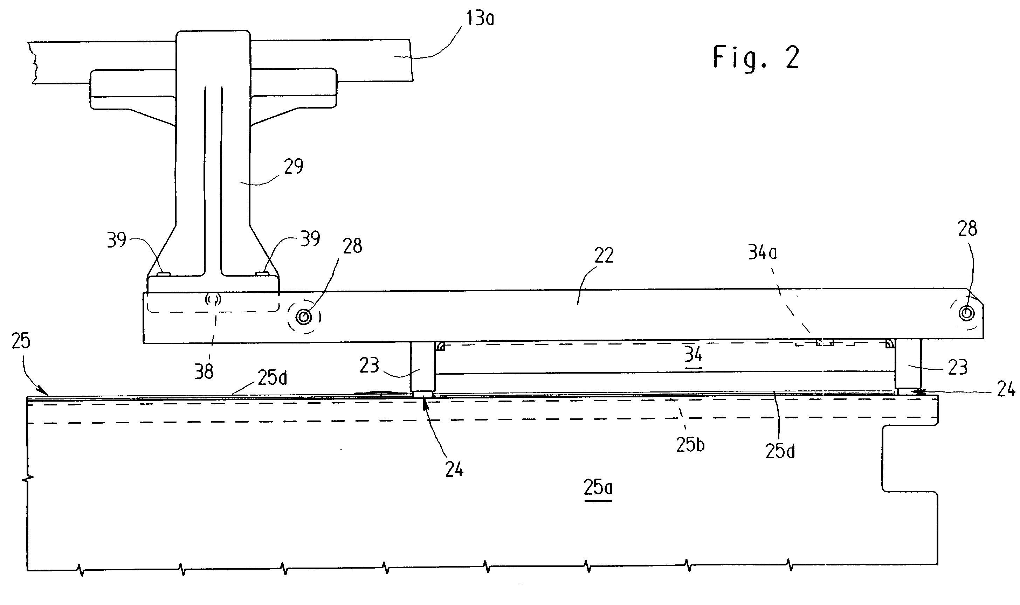

Wie sich aus den Darstellungen gemäß Fig. 2 und 3 ergibt, wird die gesamte Spritzgießeinheit von einem Schienenpaar 22 getragen, das über zwei Querstangen 28 zu einem Schlitten verbunden ist.

Stirnseitig trägt dieser Schlitten Tragelemente 29 für die Antriebseinheit. In Fig. 4 sind die Tragelemente über Verbindungsbolzen 38, 39 mit dem Schienenpaar 22 verbunden. Bei den Tragelementen handelt es sich um zwei identische Tragelemente, von denen eines einer Kolbenstange 13a des Antriebszylinders 13 zugeordnet ist. In Fig. 5 sind die Tragelemente spiegelsymmetrisch zu einer durch die Spritzachse s-s gehenden vertikalen Ebene angeordnet. Es handelt sich um Gußkörper, die im Bereich der Kolbenstangen 13a als radial gespaltene Spannmuffen 29a (Fig. 11) ausgebildet sind und mittels die Spaltfugen durchsetzende Spannbolzen 33 mit einem Spannstück 29b zur Verklemmung der Kolbenstangen 13a verbunden sind.

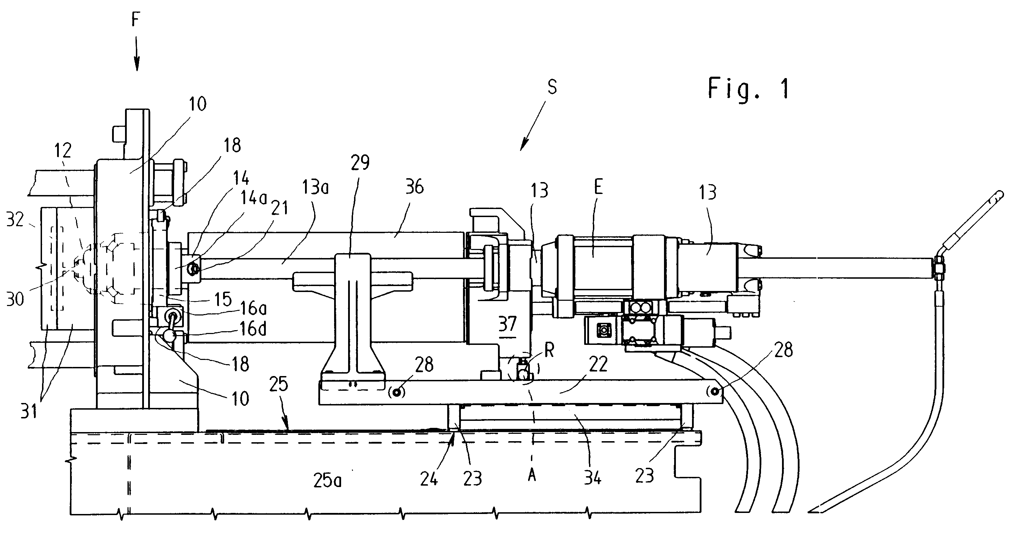

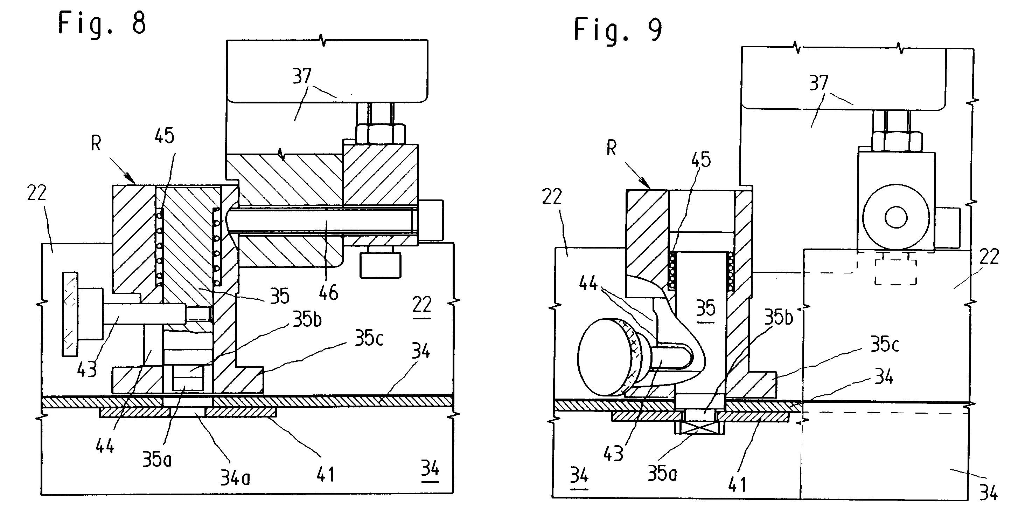

Die Kreuzschienen 23 sind über eine Stützschiene 34 miteinander verbunden, die eine Rastöffnung 34a besitzt, in der die Spritzgießeinheit S mittels einer Rasteinrichtung R verrastbar ist. Diese Rasteinrichtung R ist als vergrößerter Teilbereich A von Fig. 1 in den Fign. 8 und 9 dargestellt. Im Bereich der Rastöffnung ist eine Gegenplatte 41 angeordnet, die eine rechteckige Öffnung aufweist, in die ein Rastelement 35 eintaucht. Das Rastelement 35 besitzt dabei ein Rechteckelement 35a und einen Hintergriff 35b. Über einen Hebel 43 kann das Rastelement 35 gegen die Kraft einer Feder 45 in einem Schlitz 44 zunächst vertikal bewegt und dann horizontal gedreht werden. In der unverriegelten Stellung gemäß Fig. 8 erstreckt sich dabei der Hebel 43 quer zur Spritzachse. Bei der vertikalen Bewegung des Hebels 43 stimmt die Querschnittsform des Rechteckelements 35a mit der Rastöffnung 34a hinsichtlich der Querschnittsform überein. Bei der anschließend erfolgenden Drehbewegung, deren Endzustand in Fig. 8 dargestellt ist, wird das Rechteckelement 35a unter die Gegenplatte 41 gedreht, was zu einem Verrasten des Hintergriffs 35b mit der Gegenplatte 41 führt. Das Rastelement 35 taucht oberhalb des Hintergriffs 35b in die Rastöffnung 34a bis nahezu zum Anliegen an die Gegenplatte 41 ein. Die Rasteinrichtung R stützt sich über den Auflagebereich 35c an der Stützschiene 34 ab. Gemäß Fig. 8 kann die gesamte Rasteinrichtung nachträglich mittels Bolzen 46 am Tragkörper 37 befestigt werden.

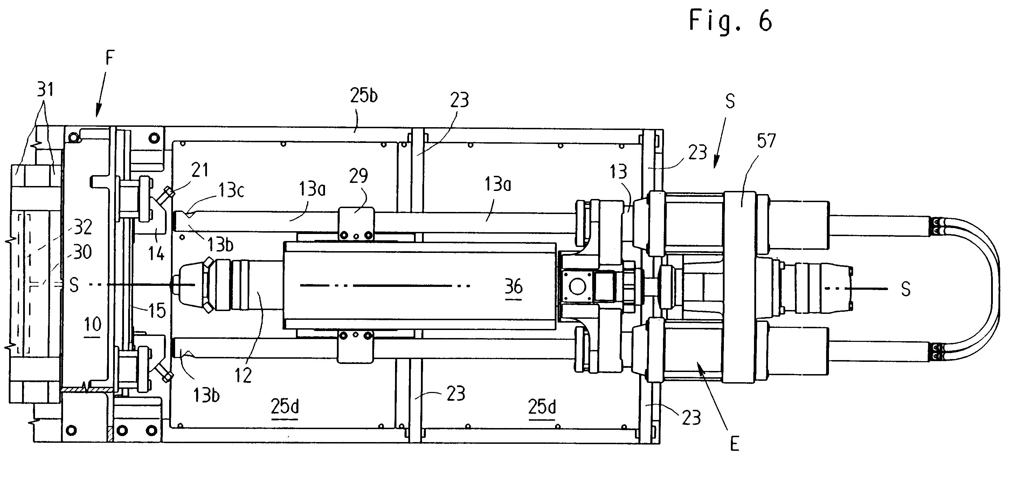

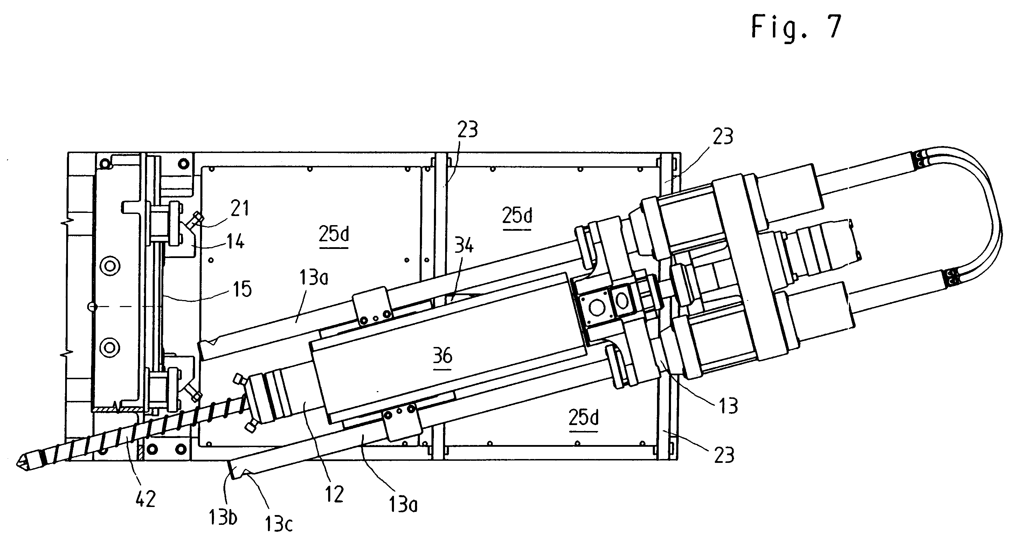

Zur Verrastung wird die Spritzgießeinheit bis zur "Indexierung" zurückgefahren, bis eine Überdeckung zwischen Rechteckelement 35a und Rastöffnung 34a eintritt. Nach der Verrastung werden die Kolbenstangen 13a vom Muffenträger an den Spannbolzen 21 gelöst. Durch den sonst das Vorfahren bewirkenden Vorgang werden dann die Kolbenstangen zurückgefahren (Fig. 6). In der indexierten Stellung ist gefahrlos eine Verschwenkung der Spritzgießeinheit auf den Kreuzschienen 23 wie in Fig. 7 dargestellt möglich, um beispielsweise die Förderschnecke 42 zu Reinigungszwecken aus dem Plastifizierzylinder herauszuziehen. Bei dieser Verschwenkung befindet sich der im Bereich des Tragkörpers 37 liegende Schwerpunkt ungefähr über dem von der Rasteinrichtung R vorgegebenen Schwenkpunkt P. Die Rastöffnung 34a ihrerseits befindet sich aber aufgrund der Anordnung der Stützschiene 34 ebenfalls ungefähr mittig in der Symmetrieebene m-m der Spritzgießmaschine.

Trotz allem sind die Innenräume des Maschinenfußes 25 über die Abdeckplatten 25d, wie aus den Fign. 2, 10 ersichtlich, jederzeit zugänglich, da die Abdeckplatten 25d unter den Kreuzschienen bedarfsweise herausgezogen werden können. Je nachdem auf welcher Seite der Spritzgießmaschine eine Wartung im Innenraum des Maschinenfußes erforderlich ist, kann die Spritzgießeinheit jeweils so verschoben werde, dadaß eine freie Zugänglichkeit ohne Behinderung durch die Spritzgießeinheit S möglich ist.

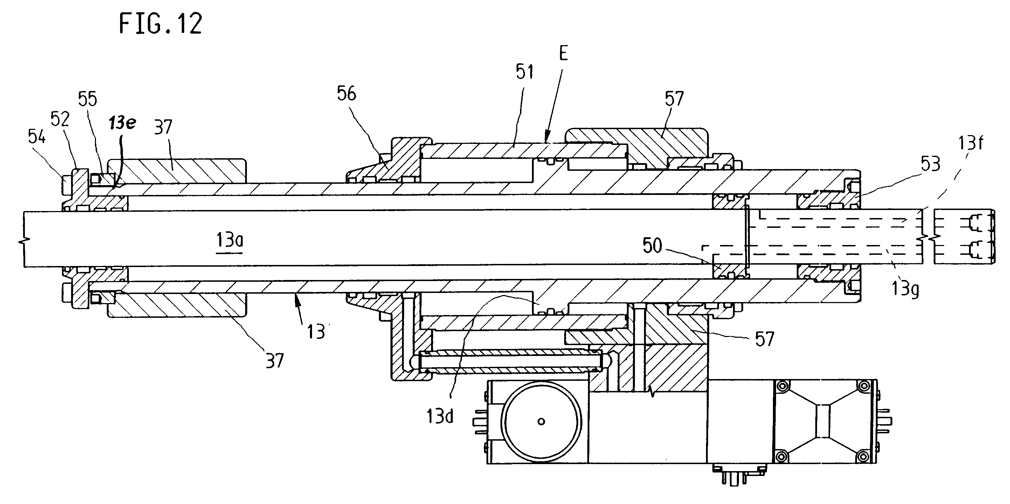

Aus Fig. 1 und 12 ergibt sich der generelle Aufbau der Spritzgießeinheit. Der Plastifizierzylinder ist von einem Schutzgehäuse 36 umgeben und die Einspritzzylinder E liegen koaxial mit den Antriebszylindern 13. Die Antriebszylinder 13 sind zum axialen Verschieben der Spritzgießeinheit auf den als Führungssäulen dienenden Kolbenstangen 13a aufgenommen. Die Ringkolben 50 der Antriebszylinder 13 sitzen auf den Führungssäulen fest auf. Die Antriebszylinder bestehen somit je aus einer Kolbenstange 13a mit zugehörigen Ringkolben 50, einem durch eine Stahlhülse gebildeten eigentlichen, Zylinder und zwei Zylinderdeckeln 52,53.

Am Trägerblock 37 sind mittelbar auch zwei ebenfalls symmetrisch zur Spritzachse s-s angeordnete hydraulische Einspritzzylinder E abgestützt, die zum axialen Antreiben der im Plastifizierzylinder angeordneten, rotierbaren Förderschnecke 42 vorgesehen sind. Der Antriebszylinder 13 trägt zugleich den Kolben für den Zylinder 51 der Einspritzzylinder E. Die Stahlhülse des Zylinders 51 des Einspritzzylinders E umschließt koaxial die Stahlhülse des Antriebszylinders 13. Als Kolben für den Einspritzzylinder ein Radialflansch 13d vorgesehen, der aus der Stahlhülse des Zylinders herausgearbeitet ist und insofern mit diesem Zylinder einstückig ist.

Die Antriebszylinder 13 und die Einspritzzylinder E sind als gemeinsame bauliche Einheit am Trägerblock 37 verankert. Diese Verankerung erfolgt über einen Zylinderdeckel 52, der am Trägerblock über mehrere annäherungsweise parallel zur Spritzachse s-s etwa auf einer Kreislinie angeordnete Gewindebolzen 54 gehalten ist. Diese Gewindebolzen übergreifen ihrerseits eine Einstellmutter 55 die am vorderen Abschluß 13e des Antriebszylinder 13 mittels Gewinde verschraubt ist und der baulichen Einheit als Anlage am Trägerblock dient. Auf der Kolbenstange 13a ist der Ringkolben 50 stationär befestigt. Vor und hinter dem Ringkolben enden zwei Achsialbohrungen, die als Versorgungskanäle 13f,13g für die Zylinderräume des Antriebszylinders 13 ausgebildet sind. Die Zylinderräume werden begrenzt durch die als Kolbenstangen 13a dienenden Führungssäulen sowie die Stahlhülse des eigentlichen Zylinders und in axialer Richtung durch den Ringkolben 50 sowie die Zylinderdeckel 52,53.

Der Antriebszylinder 13, der mit dem Kolben für den Einspritzzylinder E einstückig verbunden ist, dient gleichzeitig als Kolbenstange für den Einspritzzylinder E. Der Radialflansch 13d des Zylinders ist beidseitig beaufschlagbar. Dieser Zylinderräume des Einspritzzylinders E werden dabei einerseits durch die beiden Stahlhülsen und in axialer Richtung noch durch den Zylinderdeckel 56 und die Einspritzbrücke 57 begrenzt.

Der Zusammenbau der Kunststoff-Spritzgießeinheit erfolgt dergestalt, daß über die Antriebszylinder 13 die Zylinder 51 plus Deckel 56 gestülpt werden und diese gemeinsam an der Einspritzbrücke 57 befestigt werden. Der Antriebszylinder 13 wird rückseitig mit dem Zylinderdeckel 53 versehen und sodann wird die bisher bestehende Einheit über die Führungssäulen mit dem darauf angeordneten Ringkolben 50 geschoben. Dabei wird zugleich die Durchführung durch den Tragkörper vorgenommen. Auf der Vorderseite wird die Einstellmutter 55 aufgeschraubt und somit eine Anlage der baulichen Einheit am Trägerblock 37 geschaffen. Nun wird noch der Zylinderraum durch die Einführung des Zylinderdeckels 52 verschlossen, und der Deckel wird mit Gewindebolzen 54 am Trägerblock befestigt.

## Patentansprüche

1. Kunststoff-Spritzgießmaschine mit einer Formschließeinheit (F) und einer horizontal einspritzenden Spritzgießeinheit, die bedarfsweise horizontal und quer zur ihrer Spritzachse (s-s) auf Angußöffnungen (30,30') von ersten Spritzgießformen (31) mit zentraler Angußöffnung (30) und von weiteren Spritzgießformen (31) mit nicht zentraler Angußöffnung (30') verschiebbar und dabei auf einem Träger angeordnet ist, der auf quer zur Spritzachse (s-s) angeordneten Stützelementen angeordnet ist, die sich an parallelen Längswänden (25a) des Maschinenfußes (25) abstützen, wobei die Spritzgießeinheit (S) auf dem Träger horizontal an die Angußöffnungen heranführbar ist, in die plastifiziertes Material im Parallelanguß einspritzbar ist, und wobei der Formträger (10) eine in Verschieberichtung vergrößerte Durchtrittsöffnung (11) für den Plastifizierzylinder (12) der durch eine Antriebseinheit an die Spritzgießform (31,31') anlegbaren Spritzgießeinheit (S) aufweist, sowie mit Führungsorganen für sich bis zum Formträger (10) erstreckende und beim Verschieben der Spritzgießeinheit (S) in Verschieberichtung geführte Endbereiche (13a) der Antriebseinheit,
dadurch gekennzeichnet, daß der Träger durch ein in Richtung der Spritzachse (s-s) angeordnetes Schienenpaar (22) gebildet ist, das beim Verschieben auf quer zur Spritzachse angeordneten Schienen (Kreuzschienen 23) frei gleitet.

2. Spritzgießmaschine nach Anspruch 1, dadurch gekennzeichnet, daß als Endbereiche freie Enden (13b) von Kolbenstangen (13a) der Antriebseinheit in Muffen (14) wenigstens eines in den Führungsorganen verschiebbaren Muffenträgers (15) aufgenommen sind, der zwischen seinen Muffen eine Ausnehmung (15a) für den Durchtritt des Plastifizierzylinders (12) aufweist und an dem ein als eine Verschiebeeinrichtung ausgebildeter Spindeltrieb (16) für die gesamte Spritzgießeinheit (S) vorgesehen ist.

3. Spritzgießmaschine nach Anspruch 1 oder 2, dadurch gekennzeichnet, daß die als Endbereiche ausgebildeten Kolbenstangen (13a) der in der horizontalen Symmetrieebene (y-y) des Formträgers (10) angeordneten hydraulischen Antriebszylinder (13) der Antriebseinheit in als Führungsorgan ausgebildeten und am Formträger (10) befestigten Führungsschienen (18) über nahezu die gesamte Breite des Formträgers geführt ist.

4. Spritzgießmaschine nach einem der vorhergehenden Ansprüche, dadurch gekennzeichnet, daß feinbearbeitete Auflager (24) für die Kreuzschienen (23) am umgebördelten Längsrand (25b) der Seitenwände (25a) des Maschinenfußes (25) ausgebildet sind, in dem unter dem Längsrand (25b) ein Widerlagerblock (26) durch zwei Schlitze (25c) von oben anbringbar ist, der einer am Widerlagerblock (26) zentrierten Schraube (27) für die Kreuzschienen (23) als Widerlager dient.

5. Spritzgießmaschine nach einem der vorhergehenden Ansprüche, dadurch gekennzeichnet, daß das Schienenpaar (22) über zwei Querstangen (28) zu einem Schlitten verbunden ist, der stirnseitig Tragelemente (29) für die Antriebszylinder (13) trägt.

6. Spritzgießmaschine nach Anspruch 5, dadurch gekennzeichnet, daß die Tragelemente (29) aus zwei identischen, spiegelsymmetrisch zu einer durch die Spritzachse (s-s) gehenden vertikalen Ebene angeordneten Gußkörpern gebildet sind, die im Bereich der Kolbenstangen (13a) der Antriebszylinder (13) als radialgespaltene Spannmuffen (29a) ausgebildet sind und mittels die Spaltfugen durchsetzender Spannbolzen (33) mit den Kolbenstangen (13a) verklemmbar sind.

7. Spritzgießmaschine nach einem der vorhergehenden Ansprüche, dadurch gekennzeichnet, daß die aus Flachmaterial aufgebauten Kreuzschienen (23) über eine Stützschiene (34) miteinander verbunden sind, die eine Rastöffnung (34a) besitzt, in der die Spritzgießeinheit (S) verrastbar ist.

8. Spritzgießmaschine nach Anspruch 7, dadurch gekennzeichnet, daß die in der Symmetrieebene (m-m) der Spritzgießmaschine angeordnete Stützschiene (34) in der Rastöffnung (34a) ein Rastelement (35) der zurückgefahrenen Spritzgießeinheit (S) aufnimmt, daß die Rastöffnung als Schwenkpunkt (P) für eine Verschwenkung der Spritzgießeinheit (S) dient und daß in die rechteckige Restöffnung (34a) ein federbelastetes Rastelement (35) vertikal von oben einführbar und im Gefolge einer anschließenden Drehung verrastbar und nach erfolgter Verrastung die von den Muffen (14) gelösten Kolbenstangen (13a) der Antriebszylinder rückziehbar sind.

9. Spritzgießmaschine nach einem der vorhergehenden Ansprüche, dadurch gekennzeichnet, daß die Ringkolben (50) der Antriebszylinder (13) auf den Kolbenstangen (13a) fest aufsitzen und daß der Antriebszylinder (13) einstückig mit dem als Radialflansch (13d) des Antriebszylinders (13) ausgebildeten Kolben für den Zylinder (51) von Einspritzzylindern (E) ist.

10. Spritzgießmaschine nach Anspruch 9 , dadurch gekennzeichnet, daß die eigentlichen Zylinder von Antriebszylinder (13) und Einspritzzylinder (E) als eine gemeinsame bauliche Einheit im Tragkörper (37) durch einen Zylinderdeckel (52) festlegbar sind und als Stahlhülsen ausgebildet sind.

## Claims

1. Plastics material injection moulding machine, including a mould closing unit (F) and a horizontally injecting injection moulding unit (S), which is displaceable, as required, horizontally and transversely relative to its injection axis (s-s) over sprue openings (30, 30') of first injection moulds (31) having a central sprue opening (30) and of additional injection moulds (31) having a non-central sprue opening (30') and is thereby disposed on a carrier which is disposed on support elements, which are disposed transversely relative to the injection axis (s-s) and are supported on parallel longitudinal walls (25a) of the machine base (25), the injection moulding unit (S) on the carrier being able to be brought horizontally near to the sprue openings, into which plasticised material in the parallel sprue is injectable, and the mould carrier (10) having an opening (11) for the plasticising cylinder (12) of the injection moulding unit (S), which is attachable to the injection mould (31, 31') by a drive unit, said opening being enlarged when viewed with respect to the direction of displacement, and the plastics material injection moulding machine also including guide means for end regions (13a) of the drive unit, which regions extend to the mould carrier (10) and are guided in the direction of displacement during the displacement of the injection moulding unit (S), characterised in that the carrier is formed by a pair of rods (22), which is disposed in the direction of the injection axis (s-s) and slides freely during the displacement movement on bars (cross-bars 23), which are disposed transversely relative to the injection axis.

2. Injection moulding machine according to claim 1, characterised in that free ends (13b) of piston rods (13a) of the drive unit are accommodated as end regions in bushings (14) of at least one bushing support (15), which is displaceable in the guide elements, said bushing support having a recess (15a) between its bushings for the passage of the plasticising cylinder (12), and a spindle drive (16) being provided on said bushing support for the entire injection moulding unit (S) and being configured as a displacement arrangement.

3. Injection moulding machine according to claim 1 or 2, characterised in that the piston rods (13a), which are configured as end regions, of the hydraulic drive cylinders (13) of the drive unit, which cylinders are disposed in the horizontal plane of symmetry (y-y) of the mould carrier (10), are guided in guide bars (18), which are configured as guide means and mounted on the mould carrier (10), over virtually the entire width of the mould carrier.

4. Injection moulding machine according to one of the preceding claims, characterised in that finely machined bearings (24) for the cross-bars (23) are provided on the flanged longitudinal edge (25b) of the lateral walls (25a) of the machine base (25), in which an abutment block (26) can be brought from above beneath the longitudinal edge (25b) through two slots (25c), which block serves as an abutment for a screw (27), which is centred on the abutment block (26), for the cross-bars (23).

5. Injection moulding machine according to one of the preceding claims, characterised in that the pair of rods (22) is connected by two cross-bars (28) to form a slide which has, on its end face, supporting members (29) for the drive cylinders (13).

6. Injection moulding machine according to claim 5, characterised in that the supporting members (29) are formed from two identical castings, which are disposed in a mirror-symmetrical manner relative to a vertical plane extending through the injection axis (s-s), said castings being configured as radially split tensioning bushes (29a) in the region of the piston rods (13a) of the drive cylinders (13) and being clampable to the piston rods (13a) by means of clamping bolts (33) traversing the split joints.

7. Injection moulding machine according to one of the preceding claims, characterised in that the cross-bars (23), formed from flat material, are interconnected via a supporting bar (34), which has a locking aperture (34a) in which the injection moulding unit (S) is lockable.

8. Injection moulding machine according to claim 7, characterised in that the supporting bar (34), disposed in the plane of symmetry (m-m) of the injection moulding machine, accommodates in the locking aperture (34a) a locking element (35) of the returned injection moulding unit (S), in that the locking aperture serves as a pivot point (P) for a pivotal movement of the injection moulding unit (S), and in that a spring-loaded locking element (35) is insertable into the rectangular locking aperture (34a) vertically from above and lockable as a result of a subsequent rotation and, once the locking has been effected, the piston rods (13a) of the drive cylinders released from the bushings (14) are withdrawable.

9. Injection moulding machine according to one of the preceding claims, characterised in that the ring pistons (50) of the drive cylinders (13) rest securely on the piston rods (13a), and in that the drive cylinder (13) is integral with the piston for the cylinder (51) of injection cylinders (E), said piston being formed as radial flange (13d) of the drive cylinder (13).

10. Injection moulding machine according to claim 9, characterised in that the actual cylinders of drive cylinder (13) and injection cylinder (E) are securable as a joint structural unit in the supporting body (37) by means of a cylinder cover (52) and are configured as steel sleeves.

## Revendications

1. Machine de moulage de matière plastique par injection, comprenant une unité de fermeture du moule (F) et une unité de moulage par injection qui injecte horizontalement et qui peut être déplacée, si besoin en est, horizontalement et transversalement par rapport à son axe d'injection (s-s) jusque sur des ouvertures d'injection (30, 30') de premiers moules de moulage par injection (31) à ouverture d'injection centrale (30) et d'autres moules de moulage par injection (31) dont l'ouverture d'injection (30') n'est pas centrale, en étant disposée ici sur un support disposé sur des éléments d'appui qui sont disposés transversalement par rapport à l'axe d'injection (s-s) et qui s'appuient sur des parois longitudinales parallèles (25a) du socle (25) de la machine, cependant que l'unité de moulage par injection (S) peut être amenée horizontalement sur le support contre les ouvertures d'injection dans lesquelles de la matière ramollie peut être injectée en injection parallèle, et cependant que le portemoule (10) présente une ouverture de passage (11) qui est agrandie dans la direction du déplacement et qui est destinée au cylindre de ramollissement (12) de l'unité de moulage par injection (S), celle-ci pouvant être posée sur le moule de moulage par injection (31, 31') par une unité d'entraînement, et comprenant aussi des organes de guidage destinés à des zones d'extrémité (13a) de l'unité d'entraînement qui s'étendent jusqu'au porte-moule (10) et qui sont guidées dans la direction de déplacement lors du déplacement de l'unité de moulage par injection (S), caractérisée par le fait que le support est constitué par une paire de rails (22) qui est disposée dans la direction de l'axe d'injection (s-s) et qui, lors du déplacement, glisse librement sur des rails (traverses 23) disposés transversalement par rapport à l'axe d'injection.

2. Machine de moulage par injection selon la revendication 1, caractérisée par le fait que, comme zones d'extrémité, des extrémités libres (13b) de tiges de piston (13a) de l'unité d'entraînement sont reçues dans des manchons (14) d'au moins un porte-manchons (15) qui peut être déplacé dans les organes de guidage, qui présente entre ses manchons un évidement (15a) destiné au passage du cylindre de ramollissement (12) et sur lequel est prévu un mécanisme à broche (16) réalisé sous la forme d'un dispositif de déplacement et destiné à l'ensemble de l'unité de moulage par injection (S).

3. Machine de moulage par injection selon la revendication 1 ou 2, caractérisée par le fait que les tiges de piston (13a) réalisées sous la forme de zones d'extrémité des vérins d'entraînement hydrauliques (13) de l'unité d'entraînement, lesquelles sont disposées dans le plan de symétrie horizontal (y-y) du porte-moule (10), sont guidées, presque sur la totalité de la largeur du porte-moule, dans des rails de guidage (18) qui sont réalisés sous la forme d'un organe de guidage et qui sont fixés au porte-moule (10).

4. Machine de moulage par injection selon l'une des revendications précédentes, caractérisée par le fait que des supports (24) usinés avec précision et destinés aux traverses (23) sont ménagés sur le bord longitudinal rabattu (25b) des parois latérales (25a) du socle (25) de la machine dans lequel on peut amener depuis le haut, à travers deux fentes (25c) et sous le bord longitudinal (25b), un bloc de contreappui (26) qui sert de contre-appui à une vis (27), celle-ci étant centrée sur le bloc de contre-appui (26) et destinée aux traverses (23).

5. Machine de moulage par injection selon l'une des revendications précédentes, caractérisée par le fait que la paire de rails (22) est reliée par l'intermédiaire de deux barres transversales (28) pour former un chariot qui porte sur son côté frontal des éléments porteurs (29) destinés aux vérins d'entraînement (13).

6. Machine de moulage par injection selon la revendication 5, caractérisée par le fait que les éléments porteurs (29) sont constitués par deux corps moulés identiques qui sont disposés symétriquement par rapport à un plan vertical passant par l'axe d'injection (s-s) qui sont réalisés sous la forme de manchons de serrage fendus radialement (29) dans la région des tiges de piston (13a) des vérins d'entraînement (13) et qui peuvent être serrés sur les tiges de piston (13a) au moyen de boulons de serrage (33) traversant les fentes.

7. Machine de moulage par injection selon l'une des revendications précédentes, caractérisée par le fait que les traverses (23) qui sont constituées par un matériau plat sont reliées entre elles par l'intermédiaire d'un rail d'appui (34) qui présente une ouverture d'enclenchement (34a) dans laquelle l'unité de moulage par injection (S) peut être enclenchée.

8. Machine de moulage par injection selon la revendication 7, caractérisée par le fait que le rail d'appui (34) qui est disposé dans le plan de symétrie (m-m) de la machine de moulage par injection reçoit dans l'ouverture d'enclenchement (34a) un élément d'enclenchement (35) de l'unité de moulage par injection (S) qui est rétractée, par le fait que l'ouverture d'enclenchement sert de point de pivotement (P) en vue d'un pivotement de l'unité de moulage par injection (S), et par le fait qu'un élément d'enclenchement (35) soumis à l'action d'un ressort peut être introduit verticalement depuis le haut dans l'ouverture d'enclenchement (34a), qu'il peut être enclenché à la suite d'une rotation consécutive, et qu'après que l'enclenchement a eu lieu, les tiges de piston (13a) des vérins d'entraînement qui sont détachées des manchons (14) peuvent être rétractées.

9. Machine de moulage par injection selon l'une des revendications précédentes, caractérisée par le fait que les pistons annulaires (50) des vérins d'entraînement (13) sont montés fixes sur les tiges de piston (13a), et par le fait que le vérin d'entraînement (13) est réalisé d'un seul tenant avec le piston qui est destiné au cylindre (51) de vérins d'injection (E) et qui est réalisé sous la forme d'une bride radiale (13d) du vérin d'entraînement (13).

10. Machine de moulage par injection selon la revendication 9, caractérisée par le fait que les cylindres du vérin d'entraînement (13) et du vérin d'injection (E) peuvent être fixés dans le corps porteur (37) par un couvercle de cylindre (52) sous la forme d'un ensemble commun par construction, et qu'ils sont réalisés sous la forme de manchons en acier.
